# DEMANDE DE BREVET EUROPEEN

(11) **EP 4 807 548 A1**
(43) Date de publication de la demande: **16.09.2026**
(21) Numéro de dépôt: 25305328.4
(22) Date de dépôt: 12.03.2025
(51) Int. Cl.: G06F 9/48, G06F 9/50

(54) **PROCÉDÉ D'ORDONNANCEMENT DANS UN CALCULATEUR HAUTE PERFORMANCE**

(71) Demandeur: BULL SAS, 78340 Les Clayes-Sous-Bois (FR); Commissariat à l'énergie atomique et aux énergies alternatives (CEA), 75015 Paris (FR)
(72) Inventeur: BOUZON, LIONEL, 38830 Crêts-En-Belledonne (FR); BENHARI, ABDESSALAM, 38000 Grenoble (FR); SEROUL, PIERRE, 38650 Sinard (FR)
(74) Mandataire: Cabinet Camus Lebkiri

(57) **Abrégé**

Un aspect de l'invention concerne un procédé mis en œuvre par ordinateur d'ordonnancement d'une pluralité de tâches (J) au sein d'un calculateur hautes performances (1), comprenant :
- Réaliser une prédiction par apprentissage automatique d'énergie requise pour l'exécution de chaque tâche en fonction d'au moins une caractéristique de la tâche,
- Réaliser une prédiction par apprentissage automatique d'évolution sur une période prédéfinie de taux de dioxyde de carbone émis par l'énergie utilisée pour alimenter le calculateur hautes performances (1),
- Ordonnancer les tâches :
- Définir un ordre d'exécution des tâches en priorisant les tâches avec une énergie requise prédite la plus petite parmi les tâches de la pluralité de tâches lorsque le taux de dioxyde de carbone est supérieur à un seuil de taux sur la période prédéfinie,
- Exécuter, par le calculateur hautes performances (1), la pluralité de tâches dans l'ordre d'exécution défini.

## Description

### DOMAINE TECHNIQUE DE L'INVENTION

Le domaine technique de l'invention est celui des calculateurs haute performance (HPC).

La présente invention concerne un procédé d'ordonnancement dans un calculateur haute performance et en particulier un procédé d'ordonnancement réduisant l'impact environnemental des systèmes HPC sans nuire à leurs performances.

### ARRIERE-PLAN TECHNOLOGIQUE DE L'INVENTION

La demande croissante de puissance de calcul a poussé les systèmes de calcul à haute performance (HPC) à dépasser le seuil de « l'exascale », entraînant une augmentation significative de leur consommation énergétique et leurs émissions de dioxyde de carbone (CO2). Ces systèmes, essentiels pour l'innovation scientifique et industrielle, font face à une pression environnementale croissante en raison de leur empreinte carbone importante. La nécessité de trouver des solutions innovantes qui réduisent l'empreinte carbone de ces systèmes tout en maintenant leur efficacité computationnelle devient une priorité urgente.

Plusieurs approches et méthodes ont déjà été abordées pour réduire l'impact énergétique de l'usage des systèmes de calculateurs haute performance.

Du côté matériel, une proposition porte sur l'utilisation du Dynamic Voltage and Frequency Scaling (DVFS), une technique permettant de réduire la consommation énergétique en ajustant dynamiquement la tension et la fréquence des processeurs en fonction des charges de travail.

Du côté logiciel, Mammela et al. [O. Mammela et al..Energy-aware job scheduler for high-performance com-puting. Computer Science - Research and Development, 27(4):265-275,Aug. 2011*.*] ont exploré une version écoénergétique de la politique First Come, First Serve (FCFS, en français « Premier Arrivé, Premier Servi »), en intégrant l'arrêt des nœuds inactifs. Leurs tests sur un petit cluster HPC d'environ 400 tâches ont démontré des économies d'énergie de 6,3 %, avec une augmentation minimale du temps de complétion des tâches (0,63 %). Guzek et al. [M. Guzek et al. Multi-objectiveevolutionary algorithms for energy-aware scheduling on distributedcomputing systems. Applied Soft Computing, 24:432-446, 2014*]* ont adopté une approche théorique en utilisant des algorithmes évolutionnaires multi-objectifs couplés au DVFS pour résoudre le problème d'ordonnancement écoénergétique. À travers des modèles statistiques sur des données simulées, ils ont prouvé l'efficacité et la précision des solutions proposées. Yang et al. [X. Yanget al. Integrating dynamic pricing of electricity into energyaware scheduling for hpc systems. In Proceedings of the InternationalConference on High Performance Computing, Networking, Storageand Analysis, SC '13, New York, NY, USA, 2013. Association forComputing Machinery] ont introduit deux politiques visant à réduire les coûts d'électricité des systèmes HPC, en tenant compte des profils de puissance des tâches et des prix de l'électricité (classés en deux catégories : « haute » ou « basse »), atteignant une réduction des factures d'électricité pouvant aller jusqu'à 23 %.

Plusieurs articles explorent l'utilisation de la variation des coûts énergétiques dans le cadre du « cloud » ou du « grid computing » (en français « calcul en grille », une infrastructure informatique distribuée où plusieurs ordinateurs, parfois géographiquement dispersés, collaborent pour traiter des tâches complexes en partageant leurs ressources de calcul). Par exemple, l'article de Weisner et al. [P. Weisner et al. Let's wait awhile: how temporal workload shifting can reduce carbon emissions in the cloud. 2021] examine le potentiel de réduction des émissions des centres de données en déplaçant les charges de travail vers des périodes où l'énergie est moins carbonée. Les auteurs analysent des scénarios de déplacement temporel pour des charges tolérantes aux délais, en simulant différentes stratégies.

Il est clair de l'art antérieur que de nombreuses recherches et études portent sur le sujet de la réduction l'impact énergétique et environnemental des calculateurs haute performance.

Les approches existantes ont cependant des inconvénients. Tout d'abord, les résultats ont montré qu'aucune politique unique ne permet d'optimiser efficacement à la fois l'utilisation des ressources et l'efficacité énergétique, soulignant ainsi la nécessité de politiques dynamiques.

De plus, l'extinction des nœuds d'un cluster suppose une certaine inactivité du cluster HPC, ce qui est rarement le cas dans la réalité hors situations exceptionnelles. Concernant la solution de Yang et al, le principal inconvénient des catégorisations fixes et des profils génériques pour les tâches est le manque de granularité et d'adaptabilité à chaque situation spécifique.

Enfin, ces articles abordent le problème de répartition des tâches en fonction de l'emplacement, avec la dispersion des tâches sur des multiples unités de calcul composant ces infrastructures. Ces approches ne peuvent donc être appliquées à un environnement avec un seul système HPC.

Il existe donc un besoin de proposer une solution de répartition de tâches qui possède une grande adaptabilité aux différents tâches, qui puisse fonctionner sur un unique système HPC, et qui maintienne une disponibilité du système HPC tout en permettant de réduire l'impact environnemental du système.

### RESUME DE L'INVENTION

L'invention offre une solution aux problèmes évoqués précédemment, en permettant d'ordonnancer les tâches entrantes dans un HPC en prenant en compte l'empreinte carbone du HPC sans trop impacter les performances du HPC.

Un aspect de l'invention concerne un procédé mis en œuvre par ordinateur d'ordonnancement d'une pluralité de tâches au sein d'au moins un calculateur hautes performances, le procédé comprenant :
- Réaliser au moins une prédiction par apprentissage automatique d'énergie requise pour l'exécution par le calculateur hautes performances de chaque tâche de la pluralité de tâches en fonction d'au moins une caractéristique de la tâche,
- Réaliser au moins une prédiction par apprentissage automatique d'évolution sur une période prédéfinie de taux de dioxyde de carbone émis par l'énergie utilisée pour alimenter le calculateur hautes performances à partir de données historiques de mix énergétique de la localité géographique du calculateur hautes performances,
- Ordonnancer les tâches de la pluralité de tâches comprenant :
   - Définir un ordre d'exécution des tâches par le calculateur hautes performances (1) en appliquant une première politique d'ordonnancement indépendante de l'énergie requise prédite lorsque le taux de dioxyde de carbone prédit est en dessous d'un premier seuil prédéfini, en appliquant une deuxième politique d'ordonnancement dépendante de l'énergie requise prédite lorsque le taux de dioxyde de carbone prédit est au-dessus d'un deuxième seuil prédéfini, et en pondérant la première politique et la deuxième politique lorsque le taux de dioxyde de carbone prédit se situe entre la premier seuil prédéfini et le deuxième seuil prédéfini,
   - Exécuter, par le calculateur hautes performances, la pluralité de tâches dans l'ordre d'exécution défini.

Grâce à l'invention, il est possible de proposer un ordonnanceur énergétiquement et écologiquement responsable, amélioré par rapport à l'état de l'art de façon à inclure l'aspect énergétique et l'empreinte carbone dans l'étape d'ordonnancement. Pour cela, l'invention réalise un ordonnancement de tâches d'une pluralité de tâches prenant en compte une prédiction de taux de dioxyde de carbone (CO2) du mix énergétique utilisé pour alimenter le calculateur hautes performances (HPC) et une prédiction d'énergie requise par chaque tâche lorsqu'elle est exécutée par le HPC. Grâce à l'utilisation conjointe de ces deux prédictions, réalisées par apprentissage automatique, il est possible de définir un ordre d'exécution des tâches par le HPC, l'ordre d'exécution priorisant les tâches à énergie requise faible en pic d'intensité CO2 et les tâches à énergie requise haute en intensité CO2 basse. Cela se traduit par une réduction de l'empreinte carbone du HPC tout en maintenant une efficacité de calcul élevée. En utilisant l'apprentissage automatique, l'invention peut anticiper la consommation énergétique de chaque tâche ainsi que les variations du mix énergétique en termes d'émissions de CO2.

De plus, l'intégration de ces prédictions dans le processus d'ordonnancement permet une adaptation dynamique aux conditions énergétiques changeantes, ce qui n'est pas possible avec les méthodes d'ordonnancement traditionnelles. Cette solution est particulièrement avantageuse dans des environnements où les ressources sont limitées et où l'impact environnemental est une préoccupation majeure.

L'invention se distingue de l'art antérieur en ce qu'elle permet un ordonnancement adaptatif et écologique dans un HPC unique, c'est-à-dire dans un HPC avec un mix énergétique d'alimentation électrique fixe pour tout le HPC, quand l'art antérieur choisit un HPC parmi une pluralité de HPC en fonction du mix énergétique différent de chacun des HPC.

L'invention se différencie de l'état de l'art en offrant un ordonnancement adaptatif et écologique au sein d'un système HPC unique, c'est-à-dire un HPC alimenté par un mix énergétique fixe pour l'ensemble du système. Contrairement aux approches antérieures qui sélectionnent un HPC parmi plusieurs en fonction des variations du mix énergétique de chaque système, l'invention optimise l'ordonnancement sans nécessiter de choix entre différents HPC.

Enfin, le procédé d'ordonnancement selon l'invention peut s'intégrer aisément aux infrastructures HPC existantes, évitant ainsi des investissements matériels coûteux ou de changements d'usage majeurs.

Outre les caractéristiques qui viennent d'être évoquées dans les paragraphes précédents, le procédé selon un aspect de l'invention peut présenter une ou plusieurs caractéristiques complémentaires parmi les suivantes, considérées individuellement ou selon toutes les combinaisons techniquement possibles :
- la prédiction de l'énergie requise par chaque tâche utilise un modèle de régression linéaire ou un modèle de type « Forêt Aléatoire », ou un modèle de boosting de gradient.
- l'apprentissage automatique pour la prédiction de l'évolution du taux de dioxyde de carbone utilise un modèle d'apprentissage profond.
- le modèle d'apprentissage profond est un modèle de type réseaux de neurones récurrents, un modèle de type « Mémoire à Long Court Terme » (LSTM) ou un modèle de type Transformeur de Fusion Temporelle (TFT).
- appliquer la deuxième politique d'ordonnancement dépendante de l'énergie requise prédite comprend l'attribution d'un score par un ordonnanceu du calculateur hautes performances, ce score étant basé sur l'énergie prédite par unité de calcul et de temps.
- le score attribué est utilisé conjointement avec la prédiction de taux de dioxyde de carbone pour réaliser l'ordonnancements.
- pondérer la première politique et la deuxième politique comprend attribuer un score à chaque tâche, le score attribué étant défini comme suit : S(j) = f(r̂_{co2}). S_{eco} (j) + (1 - f(r̂_{co2} )). S_{default} avec r̂_{co2} le taux de dioxyde de carbone prédit, f(r̂_{co2} ) une fonction de lissage comprise entre 0 et 1 et étant maximale lorsque le taux de dioxyde de carbone prédit est supérieur au deuxième seuil prédéfini et étant minimale lorsque le taux de dioxyde de carbone prédit est inférieur au premier seuil prédéfini, S_{eco} une fonction d'évaluation attribuant un score élevé aux tâches ayant une énergie prédite par unité de calcul basse pour appliquer la deuxième politique d'ordonnancement, et S_{default} une fonction d'évaluation pour la première politique d'ordonnancement.
- la prédiction de l'évolution du taux de dioxyde de carbone utilise une fonction de perte de type « Log-vraisemblance Négative ».

Un autre aspect de l'invention concerne un calculateur hautes performances configuré pour mettre en œuvre le procédé selon l'invention.

Un autre aspect de l'invention concerne un produit-programme d'ordinateur comprenant des instructions qui, lorsque le programme est exécuté par un ordinateur, conduisent celui-ci à mettre en œuvre le procédé selon l'invention.

Encore un autre aspect de l'invention concerne un support d'enregistrement lisible par ordinateur comprenant des instructions qui, lorsqu'elles sont exécutées par un ordinateur, conduisent celui-ci à mettre en œuvre le procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un exemple de calculateur hautes performances configuré pour mettre en œuvre le procédé d'ordonnancement selon l'invention,
- La figure 2 montre une représentation schématique d'un procédé d'ordonnancement selon un mode de réalisation de l'invention,
- La figure 3 montre une représentation schématique d'une prédiction de taux de CO2 sur une période prédéfinie dans une étape d'un procédé selon un mode de réalisation de l'invention,
- La figure 4 montre une représentation schématique d'un exemple d'ordonnancement issu du procédé selon l'invention,
- La figure 5 montre une représentation schématique d'un ordonnancement d'une pluralité de tâches par le procédé selon l'invention.

### DESCRIPTION DETAILLEE

Sauf précision contraire, un même élément apparaissant sur des figures différentes présente une référence unique.

L'invention porte sur un procédé d'ordonnancement d'une pluralité de tâches dans un calculateur hautes performances de façon à prendre en compte des considérations écologiques et de réduction de l'empreinte carbone. Au contraire de l'art antérieur, la présente invention peut être mise en œuvre dans un unique calculateur hautes performances, proposant un mix énergétique unique pour tout le calculateur hautes performances.

Selon l'invention, « ordonnancer » une pluralité de tâches comprend définir un ordre d'exécution des tâches de la pluralité de tâches puis exécuter, par le calculateur hautes performances, les tâches de la pluralité de tâches dans l'ordre défini. Ainsi, l'invention ne porte pas sur le choix de nœud(s) ou de système(s) HPC au(x)quel(s) allouer une tâche entrante, mais sur le choix de l'ordre d'exécution d'une pluralité de tâches entrantes. En effet, l'invention se concentre sur l'optimisation de l'ordre d'exécution des tâches dans un système HPC unique, en utilisant des prédictions d'énergie et d'intensité carbone pour réduire l'empreinte environnementale, plutôt que sur l'allocation des tâches à des nœuds spécifiques.

Dans les systèmes HPC de l'art antérieur comme dans l'invention, un ordonnanceur est un composant logiciel essentiel chargé de gérer l'exécution des tâches en fonction des ressources disponibles, des priorités des utilisateurs, et des politiques définies. Son rôle principal est de maximiser l'utilisation des ressources tout en respectant les contraintes de performance et de délai.

L'ordonnancement peut être représenté de manière générique par l'équation suivante *L_{sub} = argmax_{M} f*(*R, J, T*) , où :
- *L_{sub}* est l'ordre d'exécution des taches
- M représente la métrique à maximiser (généralement reliée à l'usage du HPC)
- R représente les ressources (nœuds) disponibles dans le calculateur hautes performances,
- J représente les différentes caractéristiques des taches soumises,
- T représente toutes les contraintes externes (qui dans notre cas peuvent inclure l'empreinte CO2).

La présente invention propose un ordonnanceur mettant en œuvre un procédé dynamique capable de prédire l'efficacité énergétique des tâches soumises et l'évolution du taux de dioxyde de carbone (CO2), et s'adapte à cette variation pour réduire l'impact environnemental des systèmes HPC en nuisant le moins possible à leur performance.

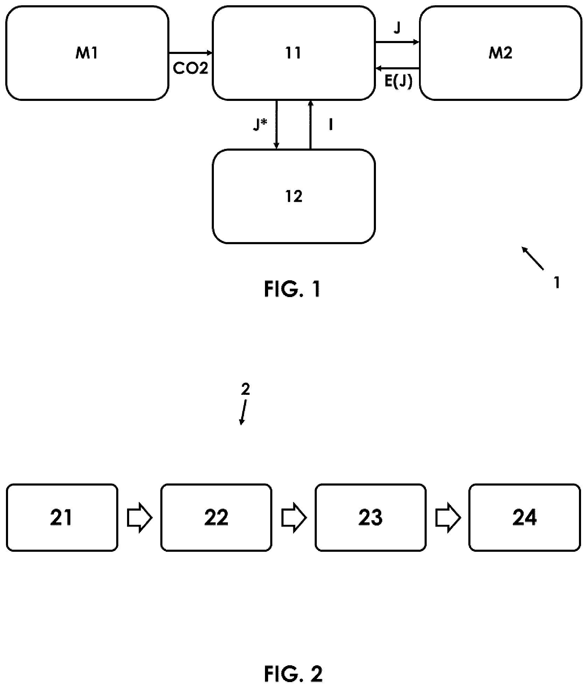

La Figure 1 montre une représentation schématique d'un exemple de calculateur hautes performances configuré pour mettre en œuvre le procédé d'ordonnancement selon l'invention. Un exemple de procédé d'ordonnancement selon l'invention est représenté schématiquement à la Figure 2.

Le calculateur haute performance (HPC) 1 représenté à la Figure 1 est un système physique comprenant au moins un ordonnanceur 11 et une pluralité de nœuds de calcul 12. Le HPC 1 comprend en outre au moins deux modèles logiciels d'apprentissage automatique M1 et M2.

L'ordonnanceur 11 utilise les modèles M1 et M2 pour respectivement prédire les variations de l'empreinte carbone du mix énergétique et prédire l'énergie requise par chaque tâche.

Les noeuds 12 sont des unités de calcul compris dans le HPC 1. Chaque noeud est une ressource matérielle capable d'exécuter des tâches de calcul, par exemple compris dans une lame de calcul d'une armoire informatique du HPC 1. L'ordonnanceur 11 attribue les tâches aux noeuds 12 en fonction de l'ordre d'exécution défini par l'ordonnanceur 11 utilisant les prédictions énergétiques et d'intensité carbone.

La figure 1 montre également les interactions entre l'ordonnanceur 11 et les noeuds 12. L'ordonnanceur 11 reçoit des nœuds 12 des informations I relatives aux ressources de calcul disponibles (par exemple, les nœuds disponibles) et aux tâches en cours d'exécution sur les nœuds 12 du HPC 1. L'ordonnanceur 11 envoie, après avoir défini leur ordre d'exécution, les tâches J* aux nœuds 12. L'ordre d'exécution est défini par l'ordonnanceur 11 à partir d'un taux de CO2 prédit par le premier modèle d'apprentissage automatique M1, et d'une énergie requise E(J) prédite par le deuxième modèle d'apprentissage automatique M2. Pour cela, l'ordonnanceur 11 aura envoyé précédemment au modèle M2 la liste des tâches J à ordonnancer.

L'invention porte notamment sur un procédé d'ordonnancement tel que l'exemple de procédé d'ordonnancement 2 représenté à la Figure 2.

Le procédé 2 selon l'invention comprend au moins quatre étapes 21 à 24.

Une première étape 21 comprend la réception, par l'ordonnanceur 11, d'une pluralité de tâches J à exécuter par le HPC 1. Les tâches J à exécuter proviennent par exemple d'utilisateurs ou d'applications qui soumettent des demandes de calcul. Ces tâches sont soumises par les utilisateurs via une interface de soumission de tâches, qui peut être un portail web, une interface de ligne de commande, ou une interface de programmation d'application (« API » de l'anglais « Application Programming Interface »). Préférentiellement, les utilisateurs spécifient les caractéristiques de chaque tâche, telles que les ressources requises, le temps d'exécution estimé, et les priorités éventuelles, et ces spécifications sont reçues avec les tâches J. Ces tâches peuvent inclure des simulations scientifiques, des analyses de données complexes, des calculs, ou d'autres opérations nécessitant une puissance de calcul élevée.

Une fois soumises, les tâches sont mises en file d'attente dans le HPC 1. L'ordonnanceur 11 récupère alors ces tâches de la file d'attente du HPC 1, soit en allant les chercher, soit en les recevant automatiquement.

Une fois la pluralité de tâches J reçues à l'étape 21, le procédé 2 comprend une étape 22 de prédiction d'énergie requise par le HPC 1 pour exécuter chaque tâche de la pluralité de tâches J. Ce modèle de prédiction d'énergie M2 est par exemple exécuté par le HPC 1, ou par un dispositif distant du HPC 1 et envoyant les résultats à l'ordonnanceur 11 du HPC 1.

Le modèle de prédiction d'énergie M2 est conçu pour estimer la consommation énergétique *e̅ⱼ* de chaque tâche J soumise au HPC 1 et reçue à l'étape 21. Cette estimation repose sur les caractéristiques des tâches, telles que le nombre de ressources requises par la tâche *qⱼ,* sa durée estimée (temps limite) *pⱼ,* et l'utilisateur qui l'a soumise *uᵢ*. Le modèle d'apprentissage automatique M2 est entraîné sur un historique des données de tâches similaires *X_{J̃}* pour mapper ces paramètres à une prédiction énergétique : ${\overline{e}}_{j} = {f}_{{X}_{{J}^{˜}}} \left(J, θ\right)$

Avec :
- *f_{xJ̃}* la fonction de prédiction
- J les caractéristiques (date de soumission, ressources, utilisateur, temps limite,...) de la tâche, utilisées pour la prédiction *(qⱼ, pⱼ,uⱼ,* ...),
- *θ* les paramètres du modèle après son entrainement.

Les prédictions de l'énergie requise par les tâches et simulations d'ordonnancement dans la présente invention peuvent utiliser des données d'entraînement extraites du jeu de données Marconi de CINECA^{®}. Ce jeu de données contient les enregistrements de soumission, d'exécution et d'utilisation des ressources d'environ 200 000 jobs par mois, sur une période de 9 mois (de janvier à septembre 2022). Chaque enregistrement de job inclut plusieurs caractéristiques, telles que le temps de soumission, le temps d'exécution, le nombre de ressources demandées et la limite de temps requise. Le jeu de données Marconi contient également les mesures de consommation électrique de tous les nœuds du cluster, relevées toutes les ΔT = 20 secondes. Cela permet de calculer la consommation énergétique de chaque job *eⱼ* en fonction de sa période et des nœuds où il a été exécuté.

Ce modèle M2 peut régulièrement être mis à jour avec des données réelles de consommation énergétique collectées auprès des nœuds 12 par l'ordonnanceur 11 après l'exécution des tâches, permettant ainsi une amélioration continue de sa précision.

Toujours à l'étape 22, préférentiellement, cette prédiction énergétique est utilisée pour calculer l'énergie que va consommer une tache par unité de calcul et de temps, par exemple par énergie par CPU.heure : $\frac{{\overline{e}}_{j}}{{q}_{i} {\overline{p}}_{i}}$ avec *qᵢ* le nombre de ressources demandées et *p̅ᵢ* le temps limite demandé. Cela permet de normaliser les prédictions et il est plus aisé de définir l'efficacité énergétique de chaque tâche pour la comparer à un seuil, à l'étape 24.

Le modèle d'apprentissage automatique M2 est préférentiellement un modèle de régression linéaire ou un modèle de type « Forêt Aléatoire » (couramment appelé « Random Forest » de l'anglais), ou un modèle de boosting de gradient, par exemple « XGBoost ». Ces modèles de boosting de gradient ou de Random Forest permettent en particulier de capturer les interactions complexes entre les caractéristiques des tâches.

Des tests ont été menés pour validation l'utilisation de certains modèles, en utilisant le jeu de données Marconi. Les modèles sont les suivants : Random Forest (RandomForestReg), Régression Linéaire (LinearReg), Régression Linéaire Ridge (RidgeReg) et XGBoost (XGBReg). Les résultats sont présentés dans le tableau 1 ci-dessous :

| Modèles | Métriques d'évaluation | | |
|---|---|---|---|
| | MAPE moyen sur les données de test | MAPE sur les données de validation | RMSE sur les données de validation |
| RandomForestReg | 0.055 | 0.054 | 21.385 |
| LinearReg | 0.091 | 0.09 | 35.192 |
| RidgeReg | 0.091 | 0.09 | 35.192 |
| XGBReg | 0.051 | 0.058 | 23.940 |

Il ressort du tableau 1 que le modèle de type RandomForest (un modèle de type 'Ensemble learning') est le plus performant pour les données utilisées, le MAPE (« Mean Absolute Percentage Error », en français « Erreur moyenne absolue en pourcentage ») et le RMSE (« Root Mean Square Error », en français « Ecart Quadratique Moyen ») étant les plus faibles du tableau. Les modèles de type « Random Forest » seront donc préférés pour mettre en œuvre un modèle M2 dans l'invention, sans s'y limiter.

En parallèle de l'étape 22, ou avant l'étape 22 ou après l'étape 22, le procédé 2 comprend une étape 23 de prédiction d'un taux de dioxyde de carbone émis par le mix énergétique utilisé pour alimenter le HPC 1 lors de l'exécution des tâches. Cette étape 23 est réalisée par le modèle M1 de prédiction de taux de CO2 sur une période prédéfinie, qui est exécuté par le HPC 1 ou par un dispositif distant envoyant le résultat de ses prédictions à l'ordonnanceur 11 du HPC 1. Cette prédiction de taux de CO2 est réalisée pour le mix énergétique fourni en entrée du HPC 1, et donc en fonction de sa localité géographique. Par exemple, la localité géographique peut être le pays de localisation, une région, une ville ou une adresse.

Le modèle de prédiction de l'empreinte carbone M1 vise à anticiper la variation du taux de CO2 du mix énergétique sur un horizon temporel donné, c'est-à-dire à prédire le taux de CO2 sur une période prédéfinie, par exemple sur une période de plusieurs minutes, heures ou jours. Ce modèle M1 exploite des données historiques du mix énergétique, telles que les sources de production d'énergie ou la demande globale en électricité. Le modèle M1 est utilisé pour fournir des prévisions précises du taux de CO₂ à différents instants t et sur plusieurs pas, sur une période prédéfinie. Il est par exemple possible d'utiliser un modèle d'apprentissage profond pour prédire la valeur du taux CO2 pour i nombre de pas après un instant t : ${\overline{r}}_{t + i} = {f}_{co 2} \left(t+i, {X}_{\left[t-n, t\right]}, W\right)$
avec W ≈ *argmin_{w}*(*L*(*w*)), et *f_{co2}* la fonction de prédiction, *t + i* le pas de prédiction, *Wₜ* les poids du modèle minimisant la fonction de perte L pendant l'entrainement du modèle, et *X*_{[*t-n, t*]} les n pas de données historiques du mix énergétique utilisées pour la prédiction.

Le modèle M1 utilisé est un modèle d'apprentissage profond (ou « Deep Learning »), par exemple du type réseaux de neurones récurrents, « Mémoire à Long Court Terme » (« LSTM », de l'anglais « Long Short-Term Memory ») ou Transformeur de Fusion Temporelle (« TFT », de l'anglais Temporal Fusion Transformer). Les modèles de type TFT seront préférés en raison de leur capacité à traiter des séries temporelles multivariées et à intégrer à la fois des caractéristiques passée et futures pouvant être corrélées à la valeur cible.

Ce modèle M1, par exemple de type TFT, est utilisé avec une fonction de perte de type Log-vraisemblance négative (« NLL » de l'anglais « Negative Log Likelihood ») avec pour objectif de maximiser la probabilité des observations réelles étant donné les prédictions probabilistes du modèle. Cette fonction est bien adaptée pour les prédictions multi-pas, surtout avec l'usage de prédiction probabiliste qui fournit non seulement une estimation (moyenne), mais aussi un degré d'incertitude.

La fonction de perte peut s'écrire de la façon suivante : ${L}_{NLL} = - \frac{1}{N} {\sum }_{i = 1}^{N} log \left(p\left({y}_{i}\left|{μ}_{i}, {σ}_{i}\right.\right.\right)$

Avec p la distribution de probabilité gaussienne s'écrivant comme suit : $p \left({y}_{i}\left|{μ}_{i}, {σ}_{i}\right.\right) = \frac{1}{\sqrt{2 {πσ}_{i}^{2}}} ∗ exp \left(-\frac{{\left({y}_{i}-{μ}_{i}\right)}^{2}}{2 {σ}_{i}^{2}}\right)$

Avec yi la valeur observée réelle pour l'observation i, µi la moyenne de la distribution de probabilité prédite pour l'observation i et σi l'écart-type de la distribution de probabilité prédite pour l'observation i.

Pour mesurer et prédire l'évolution de l'empreinte carbone, il est par exemple possible d'utiliser un ensemble de données historiques sur le mix énergétique. Dans le cas d'un HPC 1 situé en France, il est possible d'utiliser l'ensemble de données historiques sur le mix énergétique français fourni par RTE France^{®} et publié via OpenDataSoft^{®}. Ce jeu de données, composé d'environ 300 000 points, couvre l'historique des différentes sources de production d'énergie (nucléaire, fossile, etc.) entre janvier 2012 et janvier 2023, ainsi que l'évolution des taux de CO2, avec un intervalle de temps de 15 minutes entre deux points consécutifs.

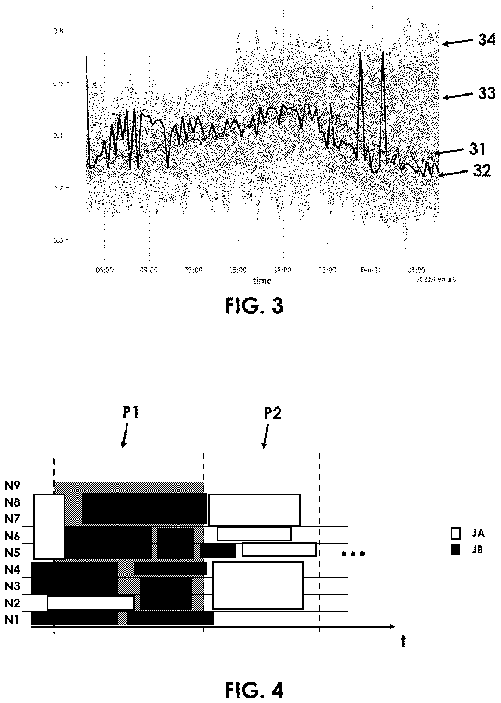

La Figure 3 montre une représentation schématique d'une prédiction de taux de CO2 sur une période de 24h, par pas de 15 minutes, par un modèle de type TFT. La courbe 31 est la courbe de taux prédit de CO2, la courbe 32 est la courbe réelle de taux de CO2, et l'aire 33 correspond aux percentiles 10 à 90 et l'aire 34 correspond aux percentiles 1 à 99.

Une fois les prédictions des étapes 22 et 23 obtenues par l'ordonnanceur 11 pour les tâches reçues à l'étape 21 et pour la période prédéfinie, le procédé comprend une étape 24 d'ordonnancement des tâches en fonction de ces prédictions.

Pour cela, l'ordonnanceur 11 met en œuvre une politique d'ordonnancement utilisant une fonction de lissage, qui respecte l'équation : $f \left(x\right) ∈ \left[0, 1\right] , ∀ x$

Cette fonction permet une prise en compte continue des variations du taux de CO₂ au cours du processus d'ordonnancement, contribuant à une adaptation continue de l'ordonnanceur.

Préférentiellement, cette politique attribue deux poids différents : *f*(*r̂_{co2}*) et 1 - *f*(*r̂*_{*co*2}), respectivement à une politique écologique *S_{eco}* et à une politique par défaut *S_{default}.* Ces poids sont dynamiquement ajustés en fonction du taux de CO₂ moyen prédit par heure *r̂*_{*co*2}.

La politique *S_{default}* est une fonction d'évaluation (« scoring » en anglais) classique utilisée par un ordonnanceur usuel. Dans l'invention, on peut utiliser toute méthode d'évaluation usuelle en tant que politique *S_{default},* par exemple une méthode d'évaluation du type « FCFS » de l'anglais « First Come First Serve », en français « Premier Arrivé Premier Servi ».

La politique S_{eco} est une fonction de scoring écologique qui favorise les tâches moins énergivores à travers les prédictions d'énergie des jobs reçues à l'étape 22.

La fonction d'évaluation S de cet ordonnanceur 11 peut alors s'écrire comme suit : $S \left(j\right) = f \left({\hat{r}}_{co 2}\right) . {S}_{eco} \left(j\right) + \left(1-f\left({\hat{r}}_{co 2}\right)\right) . {S}_{default}$

Avec j la tâche à évaluer.

Ainsi, lorsque le taux de CO2 ***r̂*_{*co*2}** est très bas, c'est-à-dire en cas de période d'intensité carbone basse, la politique ***S_{default}*** peut être la seule mise en œuvre, car ***f***(***r̂*_{*co*2}**) retourne alors une valeur nulle ou proche d'une valeur nulle. Cela permet d'exécuter les tâches les plus énergivores en période de basse intensité carbone, ou de ne pas prendre en compte le score écologique et d'exécuter les tâches dans l'ordre défini par la méthode d'évaluation traditionnelle. Ne prendre en compte que la politique usuelle en période de basse intensité carbone permet de tout de même exécuter toutes les tâches de la file d'attente, en évitant que certaines tâches ne soient jamais exécutées et restent dans la file d'attente. Une période d'intensité carbone basse est par exemple une période d'intensité carbone durant laquelle le taux de dioxyde de carbone est sous un premier seuil prédéfini. Un tel premier seuil prédéfini de taux de dioxyde de carbone peut être prédéfini en quartile des observations historiques de taux de dioxyde de carbone, par exemple le seuil de taux de dioxyde de carbone en-deçà duquel la fonction de lissage f vaut 0 est le premier quartile des données historiques de taux de dioxyde de carbone. Lorsque le taux de dioxyde de carbone est compris dans ce premier quartile des données historiques, il est considéré que l'intensité carbone est « basse ».

Au contraire, lorsque le taux de dioxyde de carbone est élevé sur la période prédéfinie, la politique *S_{eco}* est l'unique politique mise en œuvre, car ***f***(***r̂***_{*co*2}) vaut 1 ou s'approche de 1. Avec la politique *S_{eco},* les tâches de la pluralité de tâches avec une énergie requise prédite la plus petite parmi les tâches de la pluralité de tâches se voient attribuer un score élevé. Plus l'énergie requise prédite est élevée parmi les tâches de la pluralité de tâches, plus le score attribué à la tâche sera faible. Une période d'intensité carbone haute est par exemple une période d'intensité carbone durant laquelle le taux de dioxyde de carbone est au-dessus d'un deuxième seuil prédéfini. Un tel deuxième seuil prédéfini de taux de dioxyde de carbone peut être prédéfini en quartile des observations historiques de taux de dioxyde de carbone, par exemple le seuil de taux de dioxyde de carbone au-delà duquel la fonction de lissage f vaut 1 est le troisième quartile des données historiques de taux de dioxyde de carbone. Ainsi, lorsque le taux de dioxyde de carbone est compris dans la dernier quartile des données historiques, il est considéré que l'intensité carbone est « haute ».

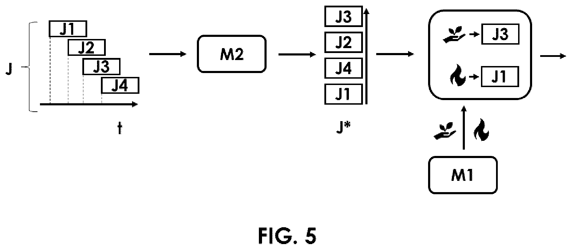

Cela est représenté schématiquement à la Figure 5, qui montre une représentation schématique d'un ordonnancement d'une pluralité de tâches J1 à J4 entrantes sur une même période.

Comme représenté, après avoir reçu les taches J1 à J4, le modèle M2 prédit leur énergie requise, et fournit cette prédiction à l'ordonnanceur 11. Les tâches peuvent être ordonnées selon leur énergie requise pour obtenir des tâches dans un ordre de consommation d'énergie J*. Le modèle M1 prédit le taux de dioxyde de carbone sur la période d'exécution et indique si la période est une période de basse intensité carbone ou d'intensité carbone élevée. En cas de période d'intensité carbone basse, c'est alors J3 qui sera exécutée, car J3 a une énergie requise prédite élevée, et en cas de période d'intensité carbone élevée, c'est alors J1 qui sera exécutée, car J1 a une intensité carbone prédite basse. Ce fonctionnement n'est qu'un exemple schématique pour aider à la compréhension, et ne représente pas le fonctionnement réel de l'ordonnancement selon l'invention, qui utilise les méthodes d'évaluation présentées précédemment.

Pour ordonnancer les tâches J reçues à l'étape 21, chaque tâche se voit donc attribuer un score selon la fonction S(j). Un score élevé correspond alors à une priorité élevée et un score bas correspond à une priorité basse d'exécution de la tâche.

Cette fonction d'évaluation S prend en compte à la fois les prédictions d'énergie requise de l'étape 22 et de taux de CO2 de l'étape 23, indiquant alors qu'une tâche à score élevé en période d'intensité carbone élevée est une tâche à énergie requise prédite faible, et qu'une tâche à score élevé en période d'intensité carbone faible est une tâche à énergie requise prédite élevée ou a été évaluée selon une politique d'ordonnancement usuelle telle que le FCFS.

Un exemple d'ordonnancement est représenté schématiquement à la Figure 4. Les tâches JB sont des tâches énergivores, donc à énergie requise prédite élevée, par exemple car leur énergie requise prédite est la plus élevée des tâches entrantes sur une période prédéfinie, ou car elle est supérieure à un seuil d'énergie prédéfini. Les tâches JA sont des tâches peu énergivores, donc à énergie requise prédite faible, par exemple car leur énergie requise prédite est la plus faible des tâches entrantes sur une période prédéfinie, ou car elle est inférieure à un seuil d'énergie prédéfini. La période P1 est une période durant laquelle l'intensité carbone est faible (donc le taux de dioxyde de carbone prédit est faible, par exemple car inférieur à un seuil) et la période P2 est une période durant laquelle l'intensité carbone est élevée (donc le taux de dioxyde de carbone prédit est élevé, par exemple car supérieur au seuil). On remarque que la majorité des tâches énergivores J2 ont été ordonnancées dans la période P1 pour minimiser l'intensité carbone totale (les émissions de dioxyde de carbone), car le mix énergétique émettait peu de carbone sur cette période P1. De même, la majorité des tâches peu énergivores JA ont été ordonnancées dans la période P2 car l'intensité carbone était élevée sur cette période, car le mix énergétique émettait beaucoup de carbone sur cette période P2. Bien entendu, comme la politique usuelle ***S_{default}*** reste présente dans la fonction d'évaluation globale de l'ordonnanceur, il est possible de retrouver des tâches peu énergivores en période d'intensité carbone faible et des tâches énergivores en période d'intensité carbone élevée, mais le nombre de ces tâches a été minimisé sur ces périodes respectives.

Autrement dit, un score total S bas pour une tâche signifie que, selon la combinaison des critères écologiques et par défaut, la tâche est moins prioritaire pour l'exécution. Cela pourrait être dû à une consommation énergétique élevée, un impact carbone important sur la période, ou une priorité utilisateur plus faible. L'ordonnanceur utilise ensuite ce score pour décider de l'ordre d'exécution des tâches, en priorisant celles avec des scores plus élevés, qui sont plus favorables selon les critères définis.

L'ordre défini par l'ordonnanceur 11 en fonction des scores est ensuite envoyé aux nœuds 12 du calculateur hautes performances 1 pour exécuter les tâches J dans l'ordre défini.

L'invention a une flexibilité importante, qui repose sur sa capacité à s'adapter dynamiquement aux variations du mix énergétique et aux charges de travail, permettant une planification optimale à tout moment. De plus, l'ordonnanceur bénéficie d'une amélioration continue grâce à l'apprentissage des modèles d'intelligence artificielle M1 et M2, qui deviennent plus robustes et précis à partir des données historiques des tâches exécutées et des variations de taux de CO₂, renforçant ainsi l'efficacité de la solution au fil du temps.

Le procédé selon l'invention est mis en œuvre de manière continue, et ses décisions sont donc prises de manière dynamique et continue tout au long du cycle d'utilisation du HPC 1, assurant ainsi une adaptation constante aux variations de l'intensité carbone et des charges de travail. Par exemple, le taux de dioxyde de carbone peut être prédit par le modèle M1 pour chaque période prédéfinie, par exemple pour chaque journée à venir, permettant d'utiliser un modèle plus « lourd » d'apprentissage profond mais plus adapté au traitement des séries temporelles. L'évaluation de l'énergie requise par chaque tâche doit être réalisée par le modèle M2 à chaque nouvelle tâche reçue par l'ordonnanceur 11, il est donc important de préférer un modèle léger comme un « Random Forest ».

Des tests ont été menés pour démontrer l'intérêt de l'utilisation de la présente invention. Les résultats affichés dans le tableau 2 ci-dessous reflètent la capacité du nouvel ordonnanceur à minimiser l'empreinte carbone du HPC tout en gardant une performance efficace comparée à un ordonnanceur classique. Trois métriques ont été utilisées :
- le 'bounded slowdown moyen' (bsld) qui calcule la durée moyenne d'un job dans le système par rapport à son temps d'exécution.
- Le 'waittime' correspond au temps d'attente des tâches avant leur exécution.
- L'empreinte carbone décrit la quantité de CO2 émise lors de l'exécution des taches.

Pour simuler un ordonnanceur 'classique', nous avons choisi le FCFS (First Come First Served) comme politique d'ordonnancement avec du 'backfilling'.

La charge de travail utilisée pour ces résultats correspond à un ensemble de 20 000 jobs.

Les résultats sont présentés dans le tableau 2 suivant :

| Politique | Waittime total (s) | Bsld moyen | Empreinte carbone (kg) |
|---|---|---|---|
| FCFS | 120128.45 | 226.77 | 7963.42 |
| Invention | 126119.2 | 22.64 | 6537.68 |

Ces tests ont permis de montrer que l'ordonnancement selon la présente invention permet une augmentation légère de temps d'attente des tâches avant leur exécution (de l'ordre de 5%), pour une réduction d'empreinte carbone de 18% et un bounded slowdown divisé par 10, confirmant l'intérêt de l'implémentation de la présente invention.

## Revendications

1. Procédé (2) mis en œuvre par ordinateur d'ordonnancement d'une pluralité de tâches (J) au sein d'au moins un calculateur hautes performances (1), le procédé (2) comprenant :
- Réaliser (22) au moins une prédiction par apprentissage automatique d'énergie requise pour l'exécution par le calculateur hautes performances (1) de chaque tâche de la pluralité de tâches (J) en fonction d'au moins une caractéristique de la tâche,
- Réaliser (23) au moins une prédiction par apprentissage automatique d'évolution sur une période prédéfinie de taux de dioxyde de carbone émis par l'énergie utilisée pour alimenter le calculateur hautes performances (1) à partir de données historiques de mix énergétique de la localité géographique du calculateur hautes performances (1),
- Ordonnancer (24) les tâches de la pluralité de tâches (J) comprenant :
o Définir un ordre d'exécution des tâches par le calculateur hautes performances (1) en appliquant une première politique d'ordonnancement indépendante de l'énergie requise prédite lorsque le taux de dioxyde de carbone prédit est en dessous d'un premier seuil prédéfini, en appliquant une deuxième politique d'ordonnancement dépendante de l'énergie requise prédite lorsque le taux de dioxyde de carbone prédit est au-dessus d'un deuxième seuil prédéfini, et en pondérant la première politique et la deuxième politique lorsque le taux de dioxyde de carbone prédit se situe entre la premier seuil prédéfini et le deuxième seuil prédéfini,
o Exécuter, par le calculateur hautes performances (1), la pluralité de tâches dans l'ordre d'exécution défini.

2. Procédé (2) selon la revendication 1 selon lequel la prédiction de l'énergie requise par chaque tâche utilise un modèle (M2) de régression linéaire ou un modèle de type « Forêt Aléatoire », ou un modèle de boosting de gradient.

3. Procédé (2) selon l'une des revendications précédentes selon lequel l'apprentissage automatique pour la prédiction de l'évolution du taux de dioxyde de carbone utilise un modèle (M1) d'apprentissage profond.

4. Procédé (2) selon la revendication 3 selon lequel le modèle d'apprentissage profond est un modèle (M1) de type réseaux de neurones récurrents, un modèle de type « Mémoire à Long Court Terme » (LSTM) ou un modèle de type Transformeur de Fusion Temporelle (TFT).

5. Procédé (2) selon l'une des revendications précédentes selon lequel appliquer la deuxième politique d'ordonnancement dépendante de l'énergie requise prédite comprend l'attribution d'un score par un ordonnanceur (11) du calculateur hautes performances (1), ce score étant basé sur l'énergie prédite par unité de calcul et de temps.

6. Procédé (2) selon la revendication 5 selon lequel le score attribué est utilisé conjointement avec la prédiction de taux de dioxyde de carbone pour réaliser l'ordonnancement (24).

7. Procédé (2) selon l'une des revendications 1 à 6 selon lequel pondérer la première politique et la deuxième politique comprend attribuer un score à chaque tâche, le score attribué étant défini comme suit : S(j) = f(r̂_{co2})- S_{eco} (j) + (1- f(r̂_{co2} )). S_{default} avec r̂_{co2} le taux de dioxyde de carbone prédit, f(r̂_{co2}) une fonction de lissage comprise entre 0 et 1 et étant maximale lorsque le taux de dioxyde de carbone prédit est supérieur au deuxième seuil prédéfini et étant minimale lorsque le taux de dioxyde de carbone prédit est inférieur au premier seuil prédéfini, S_{eco} une fonction d'évaluation attribuant un score élevé aux tâches ayant une énergie prédite par unité de calcul basse pour appliquer la deuxième politique d'ordonnancement, et S_{default} une fonction d'évaluation pour la première politique d'ordonnancement.

8. Procédé (2) selon l'une des revendications précédentes selon lequel la prédiction (22) de l'évolution du taux de dioxyde de carbone utilise une fonction de perte de type « Log-vraisemblance Négative ».

9. Calculateur hautes performances (1) configuré pour mettre en œuvre le procédé (2) selon l'une des revendications précédentes.

10. Produit-programme d'ordinateur comprenant des instructions qui, lorsque le programme est exécuté par un ordinateur, conduisent celui-ci à mettre en œuvre le procédé (2) selon l'une des revendications 1 à 8.

11. Support d'enregistrement lisible par ordinateur comprenant des instructions qui, lorsqu'elles sont exécutées par un ordinateur, conduisent celui-ci à mettre en œuvre le procédé (2) selon l'une des revendications 1 à 8.
